# EUROPEAN PATENT APPLICATION

(11) **EP 4 354 313 A1**
(43) Date of publication of application: **17.04.2024**
(21) Application number: 22836530.0
(22) Date of filing: 21.03.2022
(51) Int. Cl.: G06F 16/24

(54) **DATA STORAGE METHOD, APPARATUS AND SYSTEM, STORAGE MEDIUM, AND PROGRAM PRODUCT**

(30) Priority: 08.07.2021 CN 202110770872; 09.11.2021 CN 202111319262
(71) Applicant: Huawei Cloud Computing Technologies Co., Ltd., Guizhou 550025 (CN)
(72) Inventor: QU, Qiang, Guizhou 550025 (CN); ZHANG, Ziyi, Guizhou 550025 (CN); YANG, Ruijie, Guizhou 550025 (CN)
(74) Representative: MERH-IP Matias Erny Reichl Hoffmann Patentanwälte PartG mbB
(86) International application number: PCT/CN2022/082069
(87) International publication number: WO 2023/279770

(57) **Abstract**

Embodiments of this application disclose a data storage method, apparatus, and system, a storage medium, and a program product, and pertain to the field of data storage technologies. In embodiments of this application, a data storage system is provided for multi-source cross-field media data storage based on a blockchain. The data storage system provides a data storage interface for a plurality of clients, and the client may request on-chain storage by invoking the data storage interface. The data storage system may interconnect with and serve a plurality of blockchain systems. In addition, the data storage system further includes a storage resource pool shared by the plurality of clients, to share a storage resource. This reduces problems that are prone to occur when a blockchain participant independently manages a storage resource, for example, a data error that is prone to occur, and high storage resource extension costs. Briefly, in this solution, the blockchain participant does not need to independently orchestrate logic between a client, a blockchain system, and data storage. This improves usability and universality of the blockchain system, and improves data storage security.

## Description

This application claims priority to Chinese Patent Application No. 202110770872.6, filed on July 8, 2021 and entitled "DATA STORAGE METHOD AND APPARATUS, SERVER, AND STORAGE MEDIUM", which is incorporated herein by reference in its entirety. This application further claims priority to Chinese Patent Application No. 202111319262.0, filed on November 9, 2021 and entitled "DATA STORAGE METHOD, APPARATUS, AND SYSTEM, STORAGE MEDIUM, AND PROGRAM PRODUCT", which is incorporated herein by reference in its entirety.

### TECHNICAL FIELD

Embodiments of this application relate to the field of data storage technologies, and in particular, to a data storage method, apparatus, and system, a storage medium, and a program product.

### BACKGROUND

A blockchain is a new application mode of computer technologies such as distributed data storage, a consensus mechanism, and an encryption algorithm. In a blockchain system, data is verified and stored by using a chain data structure, a data block is generated and updated by using a distributed node consensus algorithm, security of data transmission and access is ensured in a cryptography manner, and data is programmed and operated by using a smart contract including automated script code. Currently, blockchain-based data storage gains increasing attention and application.

With popularization of blockchain services and application fields, storage of multi-source cross-field media data is one of key challenges in resolving industry problems by using blockchain technologies. Multi-source means that to-be-stored data may be from different organizations, nodes, or application platforms. Cross-field means that to-be-stored data widely exists in fields such as finance, energy, aviation, agriculture, livelihood, and logistics. In addition, the multi-source cross-field media data has increasingly abundant modalities, for example, text, audio, image, and video.

### SUMMARY

Embodiments of this application provide a data storage method, apparatus, and system, a storage medium, and a program product, to store multi-source cross-field media data based on a blockchain, so as to improve usability and universality of a blockchain system and improve data storage security. The technical solutions are as follows:

According to a first aspect, a data storage method is provided. The method is performed by a first client, the first client is any one of a plurality of clients included in a data storage system, the data storage system further includes a storage resource pool shared by the plurality of clients, the data storage system provides a data storage interface for the plurality of clients, the storage resource pool is used to store multi-source cross-field media data, the plurality of clients are clients that access a plurality of blockchain systems, and the method includes:

The first client obtains a data storage request, where the data storage request carries to-be-stored first media data; and the first client invokes the data storage interface, and sends the data storage request through the data storage interface, where the data storage request indicates to store first transaction data on a blockchain and store the first media data in the storage resource pool, and the first transaction data is transaction data of the first media data.

In embodiments of this application, a data storage system is provided for multi-source cross-field media data storage based on a blockchain. The data storage system provides a data storage interface for a plurality of clients, and the client may request on-chain storage by invoking the data storage interface. The data storage system may interconnect with and serve a plurality of blockchain systems. In addition, the data storage system further includes a storage resource pool shared by the plurality of clients, to share a storage resource. This reduces problems that are prone to occur when a blockchain participant independently manages a storage resource, for example, a data error that is prone to occur, and high storage resource extension costs. In other words, in this solution, the blockchain participant does not need to independently orchestrate logic between a client, a blockchain system, and data storage. This improves usability and universality of the blockchain system, and improves data storage security.

Optionally, the data storage request further carries first verification information; and that the first client sends the data storage request through the data storage interface includes: The first client performs verification on the first media data based on the first verification information through the data storage interface; and the first client sends the data storage request through the data storage interface when the verification on the first media data succeeds. In other words, the data storage interface includes data verification logic for the client to perform data verification, to ensure data accuracy.

Optionally, the data storage request further carries first signature information, and the first signature information is obtained by signing the first media data based on a first private key; and that the first client sends the data storage request through the data storage interface includes: The first client performs verification on the first signature information based on a first public key through the data storage interface; and the first client sends the data storage request through the data storage interface when the verification on the first signature information succeeds. In other words, the data storage interface includes signature verification logic for the client to perform signature verification, to ensure data authenticity.

Optionally, the data storage system further includes a plurality of servers and a service management end; and that the first client sends the data storage request through the data storage interface includes: The first client sends the data storage request to the service management end through the data storage interface, where the data storage request further indicates the service management end to determine a first server from the plurality of servers and send the data storage request to the first server. In other words, the data storage system provides a plurality of computing nodes, to improve performance of the server.

Optionally, the data storage system further provides a data query interface for the plurality of clients, and the method further includes: The first client obtains source information of to-be-queried second media data; the first client invokes the data query interface, and sends a data obtaining request through the data query interface, where the data obtaining request carries the source information of the second media data; and the first client receives a first query result through the data query interface, where the first query result is obtained based on the source information of the second media data. In other words, the data storage system provides the data query interface for the plurality of clients, and the client may obtain media data by invoking the data query interface.

Optionally, the source information of the second media data includes second verification information, and the first query result carries found second media data; and after the first client receives the first query result through the data query interface, the method further includes: The first client performs verification on the found second media data based on the second verification information through the data query interface. In other words, the data query interface includes data verification logic for the client to perform data verification, to ensure accuracy of obtained media data.

According to a second aspect, a data storage method is provided. The method is performed by a first server, the first server is one of at least one server included in a data storage system, the data storage system further includes a plurality of clients and a storage resource pool shared by the plurality of clients, the storage resource pool is used to store multi-source cross-field media data, the plurality of clients are clients that access a plurality of blockchain systems, and the method includes:

The first server receives a data storage request, where the data storage request carries to-be-stored first media data; and the first server determines first transaction data, stores the first transaction data on a blockchain, and stores the first media data in the storage resource pool, where the first transaction data is transaction data of the first media data.

In embodiments of this application, a data storage system is provided for multi-source cross-field media data storage based on a blockchain, and a client does not need to directly interconnect with a blockchain system to perform on-chain storage, but a server interconnects with a plurality of blockchain systems to perform on-chain storage. The data storage system includes a storage resource pool shared by a plurality of clients, to share a storage resource. This reduces problems that are prone to occur when a blockchain participant independently manages a storage resource, for example, a data error that is prone to occur, and high storage resource extension costs. In other words, in this solution, the blockchain participant does not need to independently orchestrate logic between a client, a blockchain system, and data storage. This improves usability and universality of the blockchain system, and improves data storage security.

Optionally, the data storage request further carries first verification information; and that the first server determines first transaction data includes: The first server performs verification on the first media data based on the first verification information; and the first server determines the first transaction data when the verification on the first media data succeeds. In other words, in an on-chain storage process, the server can perform data verification, to ensure data accuracy.

Optionally, the data storage request further carries first signature information, and the first signature information is obtained by signing the first media data based on a first private key; and that the first server determines first transaction data includes: The first server performs verification on the first signature information based on a first public key; and the first server determines the first transaction data when the verification on the first signature information succeeds. In other words, in an on-chain storage process, the server can perform signature verification, to ensure data authenticity.

Optionally, the data storage system includes a plurality of servers and a service management end, and the first server is determined by the service management end from the plurality of servers; and that the first server receives a data storage request includes: The first server receives the data storage request sent by the service management end, where the data storage request received by the service management end is sent by a first client, and the first client is one of the plurality of clients. In other words, the data storage system provides a plurality of computing nodes, to improve performance of the server.

Optionally, the storage resource pool includes a plurality of storage nodes, and the plurality of storage nodes are configured to store the multi-source cross-field media data by classification; and that the first server stores the first media data in the storage resource pool includes: The first server classifies the first media data based on attribute information of the first media data, to obtain a classification result; and the first server determines a first storage node from the plurality of storage nodes based on the classification result, and stores the first media data in the first storage node. In other words, the server can perform classification and storage based on an attribute of media data, to perform proper storage to reduce a waste of storage space and improve storage performance.

Optionally, the method further includes: The first server receives a data obtaining request, where the data obtaining request carries source information of to-be-queried third media data; the first server queries the third media data from the storage resource pool based on the source information of the third media data, to obtain a second query result; and the first server sends the second query result. In other words, the server further has a data query capability.

Optionally, the source information of the third media data includes third verification information; and that the first server queries the third media data from the storage resource pool based on the source information of the third media data, to obtain a second query result includes: The first server queries the third media data from the storage resource pool based on the source information of the third media data; the first server performs verification on found third media data based on the third verification information; and the first server obtains the second query result when the verification on the found third media data succeeds, where the second query result carries the found third media data. In other words, the server can perform data verification on found media data, to ensure accuracy of the found media data.

Optionally, the source information of the third media data includes third verification information, and the storage resource pool includes a primary resource pool and a backup resource pool; and that the first server queries the third media data from the storage resource pool based on the source information of the third media data, to obtain a second query result includes: The first server queries the third media data from the primary resource pool based on the source information of the third media data, and performs, based on the third verification information, verification on third media data found from the primary resource pool; when the verification on the third media data found from the primary resource pool fails, or when the third media data is not found from the primary resource pool, the first server queries the third media data from the backup resource pool based on the source information of the third media data, and performs, based on the third verification information, verification on third media data found from the backup resource pool; and the first server obtains the second query result when the verification on the third media data found from the backup resource pool succeeds, where the second query result carries the third media data found from the backup resource pool. In other words, the storage resource pool has an automatic disaster recovery capability. This improves reliability of the data storage system.

According to a third aspect, a data storage apparatus is provided. The data storage apparatus has a function of implementing behavior of the data storage method in the first aspect. The data storage apparatus includes one or more modules, and the one or more modules are configured to implement the data storage method provided in the first aspect.

To be specific, a data storage apparatus is provided, the apparatus is used in a first client, the first client is any one of a plurality of clients included in a data storage system, the data storage system further includes a storage resource pool shared by the plurality of clients, the data storage system provides a data storage interface for the plurality of clients, the storage resource pool is used to store multi-source cross-field media data, the plurality of clients are clients that access a plurality of blockchain systems, and the apparatus includes:
a first obtaining module, configured to obtain a data storage request, where the data storage request carries to-be-stored first media data; and
a first processing module, configured to: invoke the data storage interface, and send the data storage request through the data storage interface, where the data storage request indicates to store first transaction data on a blockchain and store the first media data in the storage resource pool, and the first transaction data is transaction data of the first media data.

Optionally, the data storage request further carries first verification information.

The first processing module includes:
a first verification submodule, configured to perform verification on the first media data based on the first verification information through the data storage interface; and
a sending submodule, configured to send the data storage request through the data storage interface when the verification on the first media data succeeds.

Optionally, the data storage request further carries first signature information, and the first signature information is obtained by signing the first media data based on a first private key.

The first processing module includes:
a second verification submodule, configured to perform, by the first client, verification on the first signature information based on a first public key through the data storage interface; and
the sending submodule, configured to send the data storage request through the data storage interface when the verification on the first signature information succeeds.

Optionally, the data storage system further includes a plurality of servers and a service management end.

The first processing module includes:
the sending submodule, configured to send the data storage request to the service management end through the data storage interface, where the data storage request further indicates the service management end to determine a first server from the plurality of servers and send the data storage request to the first server.

Optionally, the data storage system further provides a data query interface for the plurality of clients, and the apparatus further includes:
a second obtaining module, configured to obtain source information of to-be-queried second media data;
a second processing module, configured to: invoke the data query interface, and send a data obtaining request through the data query interface, where the data obtaining request carries the source information of the second media data; and
a receiving module, configured to receive a first query result through the data query interface, where the first query result is obtained based on the source information of the second media data.

Optionally, the source information of the second media data includes second verification information, and the first query result carries found second media data.

The apparatus further includes:
a verification module, configured to perform verification on the found second media data based on the second verification information through the data query interface.

According to a fourth aspect, a data storage apparatus is provided. The data storage apparatus has a function of implementing behavior of the data storage method in the second aspect. The data storage apparatus includes one or more modules, and the one or more modules are configured to implement the data storage method provided in the second aspect.

To be specific, a data storage apparatus is provided, the apparatus is used in a first server, the first server is one of at least one server included in a data storage system, the data storage system further includes a plurality of clients and a storage resource pool shared by the plurality of clients, the storage resource pool is used to store multi-source cross-field media data, the plurality of clients are clients that access a plurality of blockchain systems, and the apparatus includes:
a first receiving module, configured to receive a data storage request, where the data storage request carries to-be-stored first media data; and
an on-chain storage module, configured to: determine first transaction data, store the first transaction data on a blockchain, and store the first media data in the storage resource pool, where the first transaction data is transaction data of the first media data.

Optionally, the data storage request further carries first verification information.

The on-chain storage module includes:
a first verification submodule, configured to perform verification on the first media data based on the first verification information; and
a determining submodule, configured to determine the first transaction data when the verification on the first media data succeeds.

Optionally, the data storage request further carries first signature information, and the first signature information is obtained by signing the first media data based on a first private key.

The on-chain storage module includes:
a second verification submodule, configured to perform verification on the first signature information based on a first public key; and
the determining submodule, configured to determine the first transaction data when the verification on the first signature information succeeds.

Optionally, the data storage system includes a plurality of servers and a service management end, and the first server is determined by the service management end from the plurality of servers.

The first receiving module includes:
a receiving submodule, configured to receive the data storage request sent by the service management end, where the data storage request received by the service management end is sent by a first client, and the first client is one of the plurality of clients.

Optionally, the storage resource pool includes a plurality of storage nodes, and the plurality of storage nodes are configured to store the multi-source cross-field media data by classification.

The on-chain storage module includes:
a classification submodule, configured to classify the first media data based on attribute information of the first media data, to obtain a classification result; and
a storage submodule, configured to: determine a first storage node from the plurality of storage nodes based on the classification result, and store the first media data in the first storage node.

Optionally, the apparatus further includes:
a second receiving module, configured to receive a data obtaining request, where the data obtaining request carries source information of to-be-queried third media data;
a query module, configured to query the third media data from the storage resource pool based on the source information of the third media data, to obtain a second query result; and
a sending module, configured to send, by the first server, the second query result.

Optionally, the source information of the third media data includes third verification information.

The query module includes:
a first query submodule, configured to query the third media data from the storage resource pool based on the source information of the third media data;
a third verification submodule, configured to perform verification on found third media data based on the third verification information; and
a first obtaining submodule, configured to obtain the second query result when the verification on the found third media data succeeds, where the second query result carries the found third media data.

Optionally, the source information of the third media data includes third verification information, and the storage resource pool includes a primary resource pool and a backup resource pool.

The query module includes:
a first processing submodule, configured to: query the third media data from the primary resource pool based on the source information of the third media data, and perform, based on the third verification information, verification on third media data found from the primary resource pool;
a second processing submodule, configured to: when the verification on the third media data found from the primary resource pool fails, or when the third media data is not found from the primary resource pool, query the third media data from the backup resource pool based on the source information of the third media data, and perform, based on the third verification information, verification on third media data found from the backup resource pool; and
a second obtaining submodule, configured to obtain the second query result when the verification on the third media data found from the backup resource pool succeeds, where the second query result carries the third media data found from the backup resource pool.

According to a fifth aspect, a data storage system is provided. The data storage system includes a plurality of clients and at least one server, a first client is one of the plurality of clients, a first server is one of the at least one server, the data storage system further includes a storage resource pool shared by the plurality of clients, the data storage system provides a data storage interface for the plurality of clients, the storage resource pool is used to store multi-source cross-field media data, and the plurality of clients are clients that access a plurality of blockchain systems. The first client is configured to implement the data storage method according to the first aspect. The first server is configured to implement the data storage method according to the second aspect.

According to a sixth aspect, a computer device is provided. The computer device includes a processor and a memory. The memory is configured to: store a program for performing the data storage method provided in the first aspect or the second aspect, and store data for implementing the data storage method provided in the first aspect or the second aspect. The processor is configured to execute the program stored in the memory. An operation apparatus of the storage device may further include a communication bus, and the communication bus is configured to establish a connection between the processor and the memory.

According to a seventh aspect, a computer-readable storage medium is provided. The computer-readable storage medium stores instructions, and when the instructions are run on a computer, the computer is enabled to perform the data storage method according to the first aspect or the second aspect.

According to an eighth aspect, a computer program product including instructions is provided. When the computer program product runs on a computer, the computer is enabled to perform the data storage method according to the first aspect or the second aspect.

Technical effects achieved in the third aspect, the fourth aspect, the fifth aspect, the sixth aspect, the seventh aspect, and the eighth aspect are similar to technical effects achieved by using corresponding technical means in the first aspect or the second aspect, and details are not described herein again.

The technical solutions provided in embodiments of this application can bring at least the following beneficial effects:

In embodiments of this application, a data storage system is provided for multi-source cross-field media data storage based on a blockchain. The data storage system provides a data storage interface for a plurality of clients, and each client may request on-chain storage by invoking the data storage interface. The plurality of clients are clients that access a plurality of blockchain systems. In other words, the data storage system may interconnect with and serve the plurality of blockchain systems. In addition, the data storage system further includes a storage resource pool shared by the plurality of clients, to share a storage resource. This reduces problems that are prone to occur when a blockchain participant independently manages a storage resource, for example, a data error that is prone to occur, and high storage resource extension costs. Briefly, in this solution, the blockchain participant does not need to independently orchestrate logic between a client, a blockchain system, and data storage. This improves usability and universality of the blockchain system, and improves data storage security.

### BRIEF DESCRIPTION OF DRAWINGS

FIG. 1 is a diagram of a system architecture related to a data storage method according to an embodiment of this application;
FIG. 2 is a diagram of an architecture of a data storage system according to an embodiment of this application;
FIG. 3 is a schematic diagram of a structure of a computer device according to an embodiment of this application;
FIG. 4 is a flowchart of a data storage method according to an embodiment of this application;
FIG. 5 is a diagram of a system architecture related to another data storage method according to an embodiment of this application;
FIG. 6 is a flowchart of a data on-chain storage method according to an embodiment of this application;
FIG. 7 is a flowchart of a data query method according to an embodiment of this application;
FIG. 8 is a flowchart of another data query method according to an embodiment of this application;
FIG. 9 is a schematic diagram of a structure of a data storage apparatus according to an embodiment of this application; and
FIG. 10 is a schematic diagram of a structure of another data storage apparatus according to an embodiment of this application.

### DESCRIPTION OF EMBODIMENTS

To make the objectives, technical solutions, and advantages of embodiments of this application clearer, the following further describes implementations of this application in detail with reference to the accompanying drawings.

It should be first noted that the network architecture and the service scenario described in embodiments of this application are intended to describe the technical solutions in embodiments of this application more clearly, and do not constitute a limitation on the technical solutions provided in embodiments of this application. A person of ordinary skill in the art may know that, with the evolution of the network architecture and the emergence of new service scenarios, the technical solutions provided in embodiments of this application are also applicable to similar technical problems.

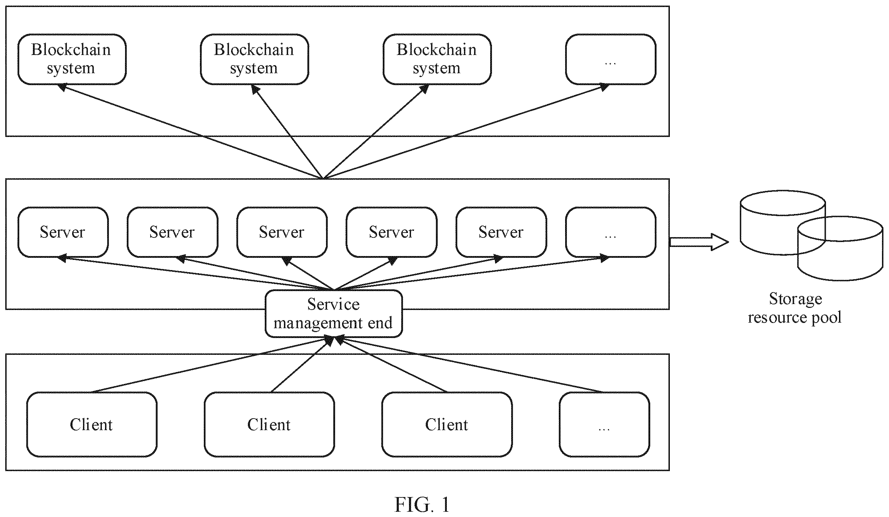

FIG. 1 is a diagram of a system architecture related to a data storage method according to an embodiment of this application. As shown in FIG. 1, the system architecture includes a plurality of clients, at least one server, and a storage resource pool. Optionally, this system is referred to as a data storage system. The data storage system provides a data storage interface (which is also referred to as a data on-chain interface) for the plurality of clients. The storage resource pool is shared by the plurality of clients. The plurality of clients are clients that access one or more blockchain systems, and it may be considered that the data storage system provided in this embodiment of this application interconnects with the one or more blockchain systems.

Any one of the plurality of clients is configured to implement a corresponding function of a client in a data storage method provided in embodiments of this application. For example, a first client receives a data storage request submitted by a blockchain participant, invokes the data storage interface, and sends the data storage request through the data storage interface, where the data storage request indicates to perform on-chain storage. The first client is any one of the plurality of clients included in the data storage system.

Optionally, one of the plurality of clients is used by one or more blockchain participants. In other words, a blockchain participant may independently use a client, or blockchain participants may share a client.

If the data storage system includes one server, the client is configured to send the data storage request to the server through the data storage interface. If the data storage system includes a plurality of servers, the data storage system further includes a service management end, and the client is configured to send the data storage request to the service management end through the data storage interface. The service management end is configured to: determine one server from the plurality of servers, and send the data storage request to the determined server. For example, the service management end determines one server from the plurality of servers according to a load balancing policy.

Any one of the at least one server is configured to implement a corresponding function of a server in the data storage method provided in embodiments of this application. For example, the server receives a data storage request, stores transaction data on a blockchain, and stores media data in the storage resource pool.

The storage resource pool is used to store multi-source cross-field media data (which is also referred to as multi-source cross-field media big data), which is shared by the plurality of clients, that is, shared by blockchain participants. In this embodiment of this application, the storage resource pool includes a plurality of storage nodes, and the plurality of storage nodes are configured to store the multi-source cross-field media data by classification. Optionally, the storage resource pool is a cloud storage resource pool.

Optionally, to improve security and accuracy of data storage, the client and/or the server are/is further configured to: perform verification, including accuracy verification (for example, digest verification) and/or authenticity verification (signature verification), on media data carried in the data storage request, and perform a subsequent operation when the verification succeeds.

Optionally, the data storage system further provides a data query interface (which is also referred to as a data obtaining interface) for the plurality of clients. Any one of the plurality of clients is further configured to invoke the data query interface to request to query media data. The server is further configured to: query the media data from the storage resource pool based on the data query request of the client, and feed back a query result. Optionally, the storage resource pool includes a primary resource pool and a backup resource pool. The backup resource pool is used to store disaster recovery data. Optionally, to improve security and accuracy of data storage, the client and/or the server are/is further configured to: perform verification, including accuracy verification (for example, digest verification), on found media data, and perform a subsequent operation when the verification succeeds.

It can be learned from the foregoing description that the data storage system provided in this solution may interconnect with a plurality of blockchain systems, and it may be considered that the data storage system has a multi-tenant capability. The data storage system provides the unified data storage interface and data query interface for clients used by all blockchain participants, and a user does not need to independently organize interaction logic between the client, the blockchain system, and storage. This improves applicability and usability of the blockchain system, and avoids a logic error caused by autonomous code writing of the user. In this way, problems such as an on-chain error that is prone to occur during autonomous logic orchestration are avoided to some extent, and stability and security of a client network, a transmission network, and a storage network are improved. The storage resource pool provided in this solution is shared by the blockchain participants and managed by the server. All interaction with storage resources needs to be performed through the server. In this way, problems such as storage resource scattering, a data loss, easy tampering, and inaccessibility caused by separate management on the storage resources by the blockchain participants are avoided to some extent. In addition, the storage resource pool is easy to extend. This reduces storage resource extension costs of the user. Classification-based storage of the storage resource pool improves storage performance and reduces a waste of storage resources. The storage resource pool is designed in a primary-backup architecture, to provide an automatic disaster recovery capability. In addition, both the client and the server can perform data verification, to ensure that data is not easily tampered with. Data verification is performed in both a media data on-chain storage process and a media data obtaining process, and two-time verification improves security and reliability.

In other words, this solution provides a blockchain-oriented rich media data storage system. The blockchain system can interconnect with and be integrated with the rich media storage system to enhance a storage capability of the blockchain system and compensate for a lack of rich media data management in the original blockchain system. From the perspective of the user, using the blockchain system interconnecting with the system is the same as using the original blockchain system. The user may not perceive a difference between common data on-chain and rich media data on-chain in terms of background processing procedures, and the user (for example, a public cloud user) does not need to independently manage rich media data storage. In addition, the rich media data storage system has capabilities such as anti-tamper, data management, disaster recovery, and cost optimization.

In embodiments of this application, any client is a user terminal or a local server. The client is also referred to as a blockchain client. Any server is a cloud server, and the server is also referred to as a computing node or a cloud computing node. The server includes a cloud computing engine, and the cloud computing engine is configured to implement a corresponding function of a server in the data storage method provided in embodiments of this application. The service management end is a cloud server.

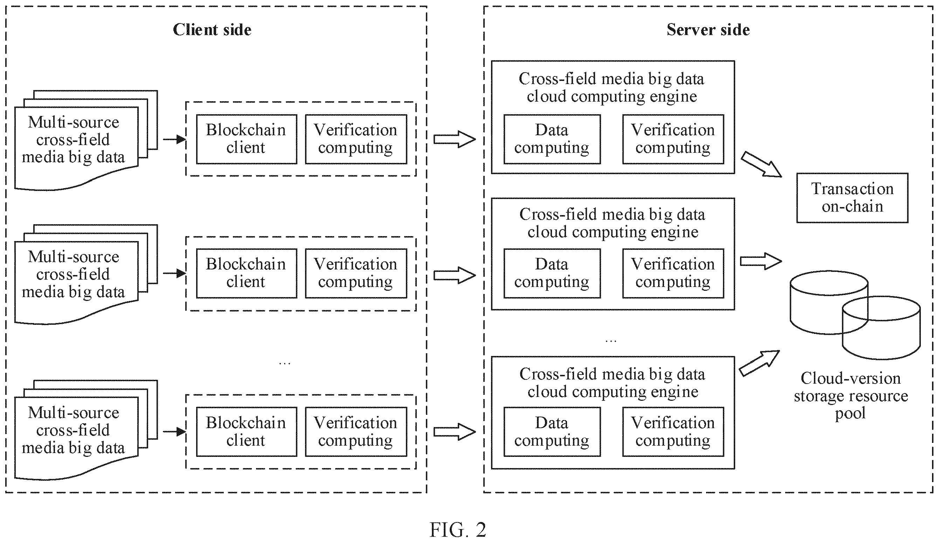

FIG. 2 is a diagram of an architecture of a data storage system according to an embodiment of this application. As shown in FIG. 2, the data storage system includes a client side and a service side. The client side includes a plurality of clients, that is, the plurality of clients include blockchain clients that access a plurality of blockchain systems. The service side includes a plurality of servers, and each server includes one cross-field media big data cloud computing engine (which is referred to as a cloud computing engine for short). The blockchain client is configured to obtain to-be-stored cross-field media big data (which is referred to as media data for short). Optionally, the client performs verification computing on the media data to ensure data accuracy. When the verification succeeds, the client sends a data storage request. After receiving the data storage request, the cloud computing engine performs verification computing on the media data. When the verification succeeds, the cloud computing engine stores the media data in a storage resource pool, that is, a cloud-version storage resource pool. In addition, when the verification succeeds, the cloud computing engine stores transaction data on a blockchain, that is, performs transaction on-chain.

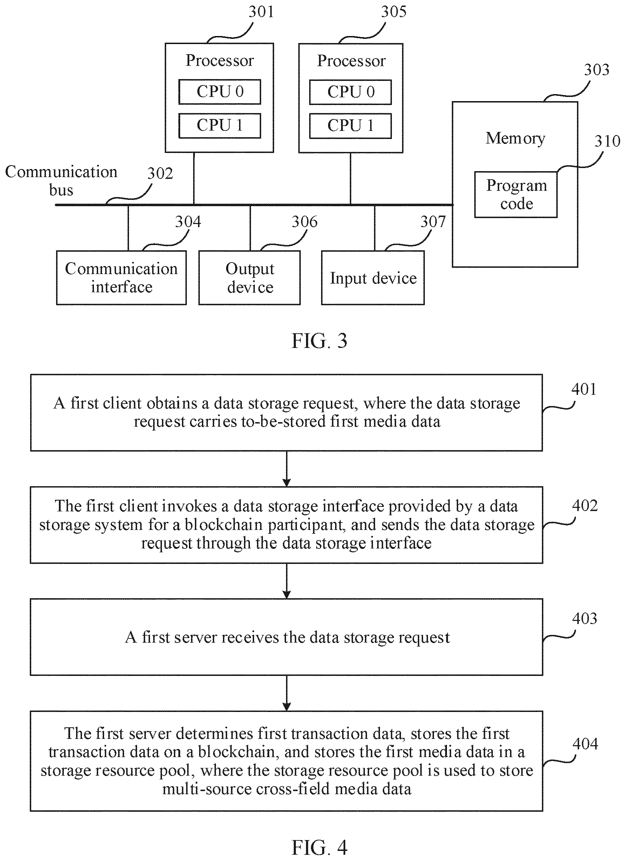

FIG. 3 is a schematic diagram of a structure of a computer device according to an embodiment of this application. Optionally, the computer device is the server shown in FIG. 1 or FIG. 2. Alternatively, the computer device is the client shown in FIG. 1 or FIG. 2. The computer device includes one or more processors 301, a communication bus 302, a memory 303, and one or more communication interfaces 304.

The processor 301 is a general-purpose central processing unit (central processing unit, CPU), a network processor (network processor, NP), a microprocessor, or one or more integrated circuits configured to implement the solutions of this application, for example, an application-specific integrated circuit (application-specific integrated circuit, ASIC), a programmable logic device (programmable logic device, PLD), or a combination thereof. Optionally, the PLD is a complex programmable logic device (complex programmable logic device, CPLD), a field-programmable gate array (field-programmable gate array, FPGA), generic array logic (generic array logic, GAL), or any combination thereof.

The communication bus 302 is configured to transmit information between the foregoing components. Optionally, the communication bus 302 is classified into an address bus, a data bus, a control bus, or the like. For ease of representation, only one thick line is used to represent the bus in the figure, but this does not mean that there is only one bus or only one type of bus.

Optionally, the memory 303 is a read-only memory (read-only memory, ROM), a random access memory (random access memory, RAM), an electrically erasable programmable read-only memory (electrically erasable programmable read-only memory, EEPROM), an optical disc (including a compact disc read-only memory (compact disc read-only memory, CD-ROM), a compact disc, a laser disc, a digital versatile disc, a Blu-ray disc, or the like), a magnetic disk storage medium or another magnetic storage device, or any other medium that can be used to carry or store expected program code in a form of instructions or a data structure and that is accessible to a computer. However, this is not limited. The memory 303 exists independently, and is connected to the processor 301 through the communication bus 302, or the memory 303 is integrated with the processor 301.

The communication interface 304 is configured to communicate with another device or a communication network by using any apparatus like a transceiver. The communication interface 304 includes a wired communication interface, and optionally further includes a wireless communication interface. The wired communication interface is, for example, an Ethernet interface. Optionally, the Ethernet interface is an optical interface, an electrical interface, or a combination thereof. The wireless communication interface is a wireless local area network (wireless local area network, WLAN) interface, a cellular network communication interface, a combination thereof, or the like.

Optionally, in some embodiments, the computer device includes a plurality of processors, for example, the processor 301 and a processor 305 shown in FIG. 3. Each of the processors is a single-core processor, or is a multi-core processor. Optionally, the processor herein is one or more devices, circuits, and/or processing cores for processing data (such as computer program instructions).

In specific implementation, in an embodiment, the computer device further includes an output device 306 and an input device 307. The output device 306 communicates with the processor 301, and can display information in a plurality of manners. For example, the output device 306 is a liquid crystal display (liquid crystal display, LCD), a light-emitting diode (light-emitting diode, LED) display device, a cathode ray tube (cathode ray tube, CRT) display device, or a projector (projector). The input device 307 communicates with the processor 301, and can receive an input from a user in a plurality of manners. For example, the input device 307 is a mouse, a keyboard, a touchscreen device, a sensing device, or the like.

In some embodiments, the memory 303 is configured to store program code 310 for performing the solutions of this application, and the processor 301 can execute the program code 310 stored in the memory 303. The program code includes one or more software modules, and the computer device can implement, by using the processor 301 and the program code 310 in the memory 303, a data storage method provided in the following embodiment in FIG. 4.

FIG. 4 is a flowchart of a data storage method according to an embodiment of this application. The method is applied to a data storage system, and the data storage system is the data storage system shown in FIG. 1 or FIG. 2. The data storage system includes a plurality of clients, at least one server, and a storage resource pool shared by the plurality of clients. In addition, the data storage system provides a data storage interface for the plurality of clients, and the storage resource pool is used to store multi-source cross-field media data. As shown in FIG. 4, the method includes the following steps.

Step 401: A first client obtains a data storage request, where the data storage request carries to-be-stored first media data.

The first client is any one of the plurality of clients included in the data storage system.

It can be learned from the foregoing description that the data storage system interconnects with one or more blockchain systems, and each client in the data storage system may receive a data storage request submitted by a blockchain participant, to perform on-chain storage of media data. The data storage system is a system designed for multi-source cross-field media data storage based on a blockchain. The plurality of clients may obtain multi-source cross-field media data, to perform on-chain storage according to the data storage method provided in this embodiment of this application.

The following uses the first client in the plurality of clients as an example for description. An implementation in which a client other than the first client in the plurality of clients obtains a data storage request to perform on-chain storage of media data is similar to the corresponding implementation of the first client. For details, refer to related descriptions of the first client.

In this embodiment of this application, the first client obtains the data storage request, and the data storage request carries the to-be-stored first media data. For example, the first client receives a data storage request submitted by a first data source, and the first data source is a blockchain participant that submits the data storage request to the first client.

Step 402: The first client invokes the data storage interface provided by the data storage system for the blockchain participant, and sends the data storage request through the data storage interface.

In this embodiment of this application, after obtaining the data storage request, the first client invokes the data storage interface, and sends the data storage request through the data storage interface. It should be noted that the data storage interface is a unified data storage interface provided by the data storage system for a client used by the blockchain participant. The data storage request sent by the first client indicates to store first transaction data on a blockchain and store the first media data in the storage resource pool. The first transaction data is transaction data of the first media data.

Optionally, the data storage request further carries first verification information. The first client performs verification on the first media data based on the first verification information through the data storage interface. The first client sends the data storage request through the data storage interface when the verification on the first media data succeeds. Optionally, the first client re-obtains a data storage request when the verification on the first media data fails. In other words, to ensure data accuracy, the first client performs verification on the first media data before sending the data storage request. For example, the first client calculates a verifiable code (for example, a digest, a cyclic redundancy check (cyclic redundancy check, CRC) code, or a parity check code) of the first media data by using a verification coding algorithm, and compares the calculated verifiable code with the first verification information. If the calculated verifiable code is consistent with the first verification information, the first client determines that the verification on the first media data succeeds. The verification coding algorithm may also be referred to as a check algorithm. The verification coding algorithm may be a digest algorithm (for example, a hash algorithm), a CRC check algorithm, a parity check algorithm, or another algorithm. This is not limited in this embodiment of this application. It should be noted that the verification coding algorithm used by the first client is consistent with an algorithm used to determine the first verification information.

Optionally, the first verification information is verification information of first data signed by the first data source, and the first data source is a blockchain participant that submits the data storage request to the first client. In other words, when submitting the first media data to the first client, the first data source includes the verifiable code (that is, the first verification information) signed by using a data source certificate, so that the first client performs data verification.

Optionally, the data storage request further carries first signature information, and the first signature information is obtained by signing the first media data based on a first private key. The first client performs verification on the first signature information based on a first public key through the data storage interface. The first client sends the data storage request through the data storage interface when the verification on the first signature information succeeds. Optionally, the first client re-obtains a data storage request when the verification on the first signature information fails. The first signature information is obtained by the first data source by signing the first media data based on the first private key. It should be noted that the first private key matches the first public key, and the first public key is shared by the first data source with the first client, to facilitate signature verification. The first client verifies, in an asymmetric encryption manner, that the first signature information is obtained by the first data source through signing. There are many implementations in which the first client performs verification on the first signature information based on the first public key through the data storage interface. This is not limited in this embodiment of this application.

It should be noted that security verification (including signature verification and/or data verification) is optional for the first client. In other words, the data storage interface may include security verification logic, or may not include security verification logic. Optionally, when the data storage interface includes signature verification logic and data verification logic, the first client may first perform verification on the first signature information by using the signature verification logic, to ensure data authenticity. When the verification on the first signature information succeeds, the first client performs verification on the first media data by using the data verification logic, to ensure data accuracy.

It can be learned from the foregoing description that the data storage system includes one or more servers. When the data storage system includes one server, the first client sends the data storage request to the server through the data storage interface, and the server is the first server. When the data storage system includes a plurality of servers, the data storage system further includes a service management end. The first client sends the data storage request to the service management end through the data storage interface, where the data storage request further indicates the service management end to determine the first server from the plurality of servers and send the data storage request to the first server. The first server is one of the at least one server included in the data storage system. For example, the service management end determines the first server from the plurality of servers according to a load balancing policy.

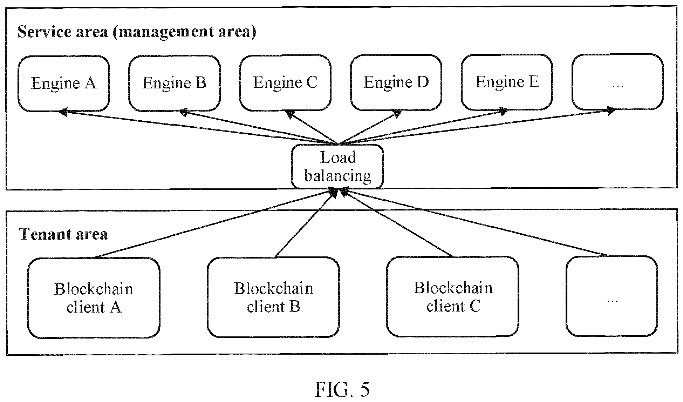

FIG. 5 is a diagram of a system architecture related to another data storage method according to an embodiment of this application. As shown in FIG. 5, it is assumed that the data storage system provided in this embodiment of this application is leased to cloud users, and the cloud users are participants of a plurality of blockchain systems. In a tenant area, a blockchain participant interconnects with a server in the data storage system by using a blockchain client. A blockchain client A, a blockchain client B, a blockchain client C, or the like invokes the data storage interface to request on-chain storage, or invokes a data query interface to request to obtain media data. In a service area (which may also be referred to as a management area), a request of a blockchain client is processed by using each server according to a load balancing policy. The server includes an engine A, an engine B, an engine C, an engine D, an engine E, or the like. It should be noted that the system architecture further includes the storage resource pool for tenants to share storage resources.

Step 403: The first server receives the data storage request.

In this embodiment of this application, when the data storage system includes one server, the first server receives the data storage request sent by the first client. When the data storage system includes a plurality of servers, the first server receives the data storage request sent by the service management end. It can be learned from the foregoing description that the data storage request received by the service management end is sent by the first client, and the first server is determined by the service management end from the plurality of servers.

Step 404: The first server determines the first transaction data, stores the first transaction data on the blockchain, and stores the first media data in the storage resource pool, where the storage resource pool is used to store multi-source cross-field media data.

In this embodiment of this application, after receiving the data storage request, the first server determines the first transaction data, and stores the first transaction data on the blockchain, that is, performs transaction on-chain. The first server further stores the first media data in the storage resource pool. The first transaction data is transaction data of the first media data.

Optionally, the transaction data may be referred to as log data. In an implementation, the first transaction data includes the first verification information (for example, a data digest). Alternatively, if the first verification information is a data digest (for example, a hash value), the first transaction data includes the first verification information; or if the first verification information is not a data digest, the first transaction data includes a digest of the first media data, and the digest of the first media data is determined by the first server based on the first media data. In addition, the first transaction data further includes data source information of the first media data, a first timestamp, a storage location of the first media data, attribute information of the first media data, and the like. The first timestamp may be determined based on a system time at which the first data source submits the data storage request.

It can be learned from the foregoing description that the data storage request further carries the first verification information. To ensure data accuracy, optionally, before determining the first transaction data, the first server performs verification on the first media data based on the first verification information. The first server determines the first transaction data when the verification on the first media data succeeds. Optionally, when the verification on the first media data fails, the first server sends, to the first client, indication information indicating a storage failure. In other words, the first server may also perform data verification. For example, the first server calculates a verifiable code of the first media data by using a verification coding algorithm, and compares the calculated verifiable code with the first verification information. If the calculated verifiable code is consistent with the first verification information, the first server determines that the verification on the first media data succeeds. The verification coding algorithm is consistent with the algorithm used to determine the first verification information. For details, refer to the foregoing related description of the verification coding algorithm used by the first client. Details are not described herein again.

Optionally, the data storage request further carries first signature information, and the first signature information is obtained by signing the first media data based on a first private key. To ensure data authenticity, optionally, before determining the first transaction data, the first server performs verification on the first signature information based on a first public key. The first server determines the first transaction data when the verification on the first signature information succeeds. Optionally, when the verification on the first signature information fails, the first server sends, to the first client, indication information indicating a storage failure. In other words, the first server may also perform signature verification. It should be noted that the first private key matches the first public key, and the first public key is shared by the first data source with the first server, to facilitate signature verification. The first server verifies, in an asymmetric encryption manner, that the first signature information is obtained by the first data source through signing. There are many implementations in which the first server performs verification on the first signature information based on the first public key. This is not limited in this embodiment of this application.

It should be noted that security verification (including signature verification and/or data verification) is also optional for the first server. Optionally, the first server may first perform verification on the first signature information, to ensure data authenticity. When the verification on the first signature information succeeds, the first server performs verification on the first media data, to ensure data accuracy.

In this embodiment of this application, the storage resource pool includes a plurality of storage nodes, and the plurality of storage nodes are configured to store the multi-source cross-field media data by classification. Optionally, the first server classifies the first media data based on attribute information of the first media data, to obtain a classification result. The first server determines the first storage node from the plurality of storage nodes based on the classification result, and stores the first media data in the first storage node.

Optionally, the first server obtains a part or all of the attribute information of the first media data from the data storage request. Optionally, the first server extracts a data feature from the first media data, and the extracted data feature may be used as a part of the attribute information of the first media data.

Optionally, the attribute information of the first media data includes a field to which the first media data belongs, a source organization or platform, a cold-hot degree, the data feature, and the like. It can be learned that in this solution, media classification and storage can be performed based on a feature of multi-source cross-field media big data, so that a waste of storage space is reduced, a high-performance storage requirement can be met, and storage performance is improved. In addition, the storage resource pool provides automatic disaster recovery and a cloud storage service decoupled from another module. This implements an extensible big data storage capability.

Optionally, the first server performs version-based storage on the first media data, that is, a historical version of the media data is not overwritten in each time of storage. The first server records the first media data and version information of the first media data, to facilitate recording and querying of a historical version. The server records an interaction history, so that data security, accessibility, and operation traceability can be improved.

Optionally, after storing the first transaction data on the blockchain and storing the first media data in the storage resource pool, the first server feeds back, to the first client, indication information indicating a storage success. If the first server fails to on-chain the transaction data or fails to store the first media data, the first server feeds back, to the first client, indication information indicating a storage failure. For example, when the verification performed by the first server on the first media data and/or the first signature information fails, the first server feeds back, to the first client, indication information indicating a storage failure, to indicate the first client to re-obtain a data storage request.

It should be noted that, it can be learned from the foregoing description that the data storage system may interconnect with a plurality of blockchain systems, that is, the plurality of clients in the data storage system are clients that access the plurality of blockchain systems. In this case, the first server stores the first transaction data in a first blockchain, and the first blockchain is a blockchain in a blockchain system accessed by the first client.

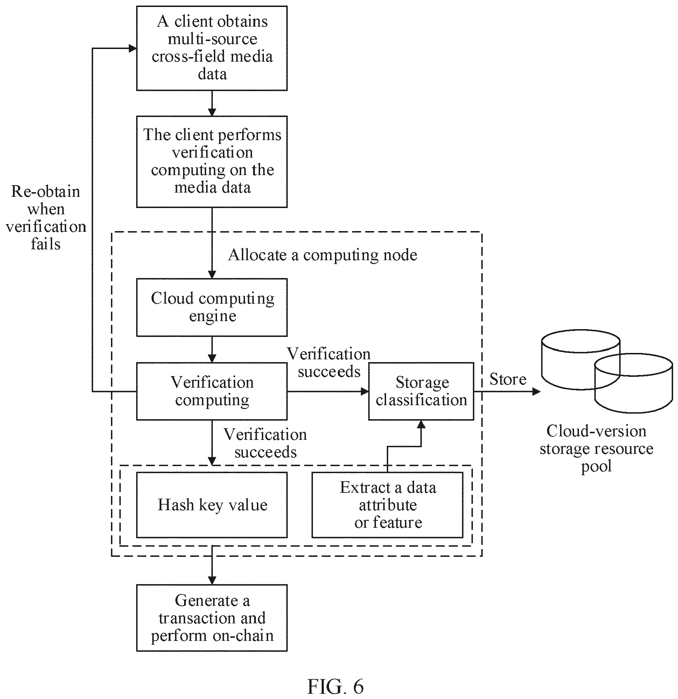

FIG. 6 is a flowchart of a data on-chain storage method according to an embodiment of this application. As shown in FIG. 6, a blockchain client (which is referred to as a client for short) performs on-chain storage of multi-source cross-field media data by invoking a data on-chain interface (that is, a data storage interface). When a blockchain client receives a data storage request, the client invokes the data on-chain interface, and logic in the data on-chain interface performs verification computing on media data. The data storage request carries to-be-stored media data and a digest of the media data. For example, the client calculates a verifiable code (for example, a digest) of the received media data by using a verification coding algorithm, and compares the calculated verifiable code with verification information carried in the data storage request, to verify accuracy of the media data, so as to prevent the media data from being tampered with or encountering an error on a transmission path. After the verification on the media data succeeds, the client sends the data storage request to the service management end. The service management end allocates a computing node according to a load balancing policy, that is, determines one server from a plurality of servers. The allocated computing node (that is, a cloud computing engine) performs verification computing on the media data, and after the verification succeeds, generates transaction data based on a hash key value (that is, the digest) and attribute information (including an extracted data feature) of the media data, and stores the transaction data on a blockchain. After the verification succeeds, the allocated computing node further stores the media data in a cloud-version storage resource pool by classification based on the attribute information of the media data.

In conclusion, in embodiments of this application, a data storage system is provided for multi-source cross-field media data storage based on a blockchain. The data storage system provides a data storage interface for a plurality of clients, and each client may request on-chain storage by invoking the data storage interface. The plurality of clients are clients that access a plurality of blockchain systems. In other words, the data storage system may interconnect with and serve the plurality of blockchain systems. In addition, the data storage system further includes a storage resource pool shared by the plurality of clients, to share a storage resource. This reduces problems that are prone to occur when a blockchain participant independently manages a storage resource, for example, a data error that is prone to occur, and high storage resource extension costs. Briefly, in this solution, the blockchain participant does not need to independently orchestrate logic between a client, a blockchain system, and data storage. This improves usability and universality of the blockchain system, and improves data storage security.

It can be learned from the foregoing description that the data storage system further provides a data query interface for the plurality of clients, so that the clients query media data. The following uses an example in which a first client requests to query second media data for description.

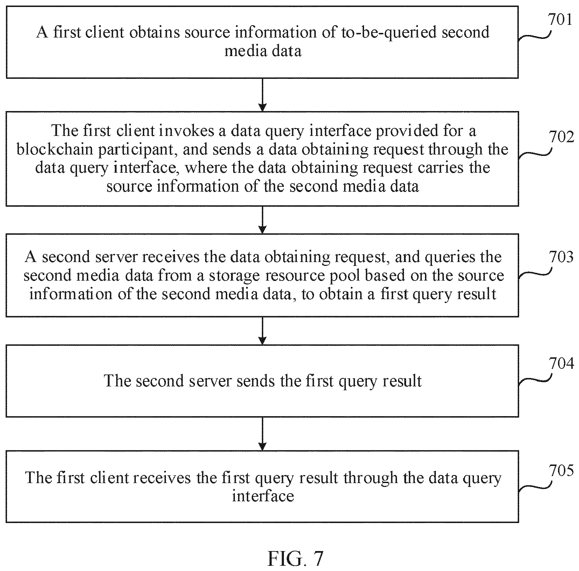

FIG. 7 is a flowchart of a data query method according to an embodiment of this application. The method is applied to a data storage system, and the data storage system is the data storage system shown in FIG. 1 or FIG. 2. As shown in FIG. 7, the data query method includes the following steps.

Step 701: A first client obtains source information of to-be-queried second media data.

In this embodiment of this application, the first client obtains the source information of the to-be-queried second media data, to query the second media data. For example, the first client stores verification information (for example, a digest) and attribute information of media data that has been on-chained. After receiving a data query request submitted by a second data source, the first client obtains the source information of the second media data from the stored verification information and attribute information of the media data that has been on-chained. The second data source is a blockchain participant that submits the data query request to the first client. The second data source and the foregoing first data source may be the same. The source information of the second media data includes second verification information, attribute information of the second media data, and the like, and the second verification information is verification information of the second media data.

Step 702: The first client invokes a data query interface provided by the data storage system for a plurality of clients, and sends a data obtaining request through the data query interface, where the data obtaining request carries the source information of the second media data.

In this embodiment of this application, the first client invokes the data query interface, and sends the data obtaining request through the data query interface, where the data obtaining request carries the source information of the second media data.

Optionally, when the data storage system includes one server, the first client sends the data obtaining request to the server through the data query interface, and the server is a second server. When the data storage system includes a plurality of servers and a service management end, the first client sends the data obtaining request to the service management end through the data query interface. After determining a second server from the plurality of servers, the service management end sends the data obtaining request to the second server. The service management end may determine the second server from the plurality of servers according to a load balancing policy. The second server and the foregoing first server may be a same server or different servers.

Step 703: The second server receives the data obtaining request, and queries the second media data from a storage resource pool based on the source information of the second media data, to obtain a first query result.

In this embodiment of this application, after receiving the data obtaining request, the second server queries the second media data from the storage resource pool based on the source information of the second media data, to obtain the first query result. For example, after receiving the data obtaining request, the second server queries transaction data of the second media data from a blockchain based on the source information of the second media data, to obtain second transaction data. The second transaction data is the transaction data of the second media data. Then, the second server parses the second transaction data to obtain a storage location of the second media data. The second server queries the second media data from the storage resource pool based on the storage location of the second media data.

Optionally, the second server queries the second media data from the storage resource pool based on the source information of the second media data, and then the second server performs verification on found second media data based on the second verification information. When the verification on the found second media data succeeds, the second server obtains the first query result, where the first query result carries the found second media data. Optionally, when the verification on the found second media data fails, the second server obtains the first query result, where the first query result carries indication information indicating an obtaining failure. The second verification information is verification information carried in the data obtaining request, or the second verification information is verification information in the second transaction data. The verification information carried in the data obtaining request is the same as the verification information in the second transaction data. For example, it is assumed that the second verification information is a second data digest. The second server calculates a digest of the found second media data by using a verification coding algorithm, and compares the calculated digest with the second data digest, to verify accuracy of the found second media data.

Optionally, to improve storage reliability, in this embodiment of this application, the storage resource pool includes a primary resource pool and a backup resource pool, to provide a disaster recovery service. Correspondingly, after receiving the data obtaining request, the second server first queries the second media data from the primary resource pool based on the source information of the second media data, and performs, based on the second verification information, verification on second media data found from the primary resource pool. When the verification on the second media data found from the primary resource pool fails, or when the second media data is not found from the primary resource pool, the second server queries the second media data from the backup resource pool based on the source information of the second media data, and performs, based on the second verification information, verification on second media data found from the backup resource pool. When the verification on the second media data found from the backup resource pool succeeds, the second server obtains the first query result, where the first query result carries the second media data found from the backup resource pool. Optionally, when the verification on the second media data found from the backup resource pool fails, the second server obtains the first query result, where the first query result carries indication information indicating an obtaining failure.

It should be noted that the backup resource pool is used to store disaster recovery data, which is also referred to as backup data. Data stored in the backup resource pool is consistent with data stored in the primary resource pool.

It can be learned from the foregoing description that a server may perform version-based storage on media data, that is, the storage resource pool stores a latest version and a historical version of the media data. Optionally, the second server first obtains a latest version of the second media data from the storage resource pool based on the source information of the second media data, and performs verification on the latest version. When the verification on the latest version fails, the second server queries a previous version of the second media data from the storage resource pool, and continues to perform verification on the found previous version of the second media data based on transaction data on a chain. After the verification succeeds, the second server determines the first query result, and the first query result carries the found previous version of the second media data and version indication information.

Step 704: The second server sends the first query result.

In this embodiment of this application, after obtaining the first query result, the second server sends the first query result to the first client. Alternatively, when the data storage system includes a plurality of servers and a service management end, the second server sends the first query result to the service management end, and the service management end forwards the first query result to the first client.

Step 705: The first client receives the first query result through the data query interface.

In this embodiment of this application, the first client may receive the first query result through the data query interface.

When the first query result carries the found second media data, to ensure accuracy of the found second media data, the first client may perform verification on the received second media data. In other words, the first client performs verification on the found second media data based on the second verification information through the data query interface. For example, it is assumed that the second verification information is a second data digest. The first client calculates a digest of the found second media data by using a verification coding algorithm, and compares the calculated digest with the second data digest, to verify accuracy of the found second media data.

Optionally, when the first query result carries indication information indicating an obtaining failure, the first client re-obtains the source information of the to-be-queried second media data.

The foregoing describes an implementation process of the data query method in this embodiment of this application by using an example in which the first client requests to query the second media data. The following describes an implementation process of the data query method in this embodiment of this application again by using an example in which the first server receives a data query request of a client. For a detailed implementation process, refer to the foregoing embodiment. The data query method includes the following step 1 to step 5.
1. A second client obtains source information of to-be-queried third media data, where the second client is a client in the data storage system.
2. The second client invokes the data query interface, and sends a data obtaining request through the data query interface, where the data obtaining request carries the source information of the third media data.
3. The first server receives the data obtaining request.
4. The first server queries the third media data from the storage resource pool based on the source information of the third media data, to obtain a second query result, and sends the second query result.

Optionally, the source information of the third media data includes third verification information. The first server queries the third media data from the storage resource pool based on the source information of the third media data. The first server performs verification on found third media data based on the third verification information. When the verification on the found third media data succeeds, the first server obtains the second query result, where the second query result carries the found third media data. In other words, the first server may perform verification on found media data, to ensure that the data is not tampered with by a storage node or does not encounter an error on a transmission path.

Optionally, the source information of the third media data includes the third verification information, and the storage resource pool includes a primary resource pool and a backup resource pool. Correspondingly, the first server queries the third media data from the primary resource pool based on the source information of the third media data, and performs, based on the third verification information, verification on third media data found from the primary resource pool. When the verification on the third media data found from the primary resource pool fails, or when the third media data is not found from the primary resource pool, the first server queries the third media data from the backup resource pool based on the source information of the third media data, and performs, based on the third verification information, verification on third media data found from the backup resource pool. The first server obtains the second query result when the verification on the third media data found from the backup resource pool succeeds, where the second query result carries the third media data found from the backup resource pool. In other words, this solution provides a disaster recovery service to improve data storage reliability.

5. The second client receives the second query result through the data query interface, where the second query result is obtained based on the source information of the third media data.

Optionally, the source information of the third media data includes the third verification information, and the second query result carries the found third media data. After receiving the second query result through the data query interface, the second client performs verification on the found third media data based on the third verification information through the data query interface.

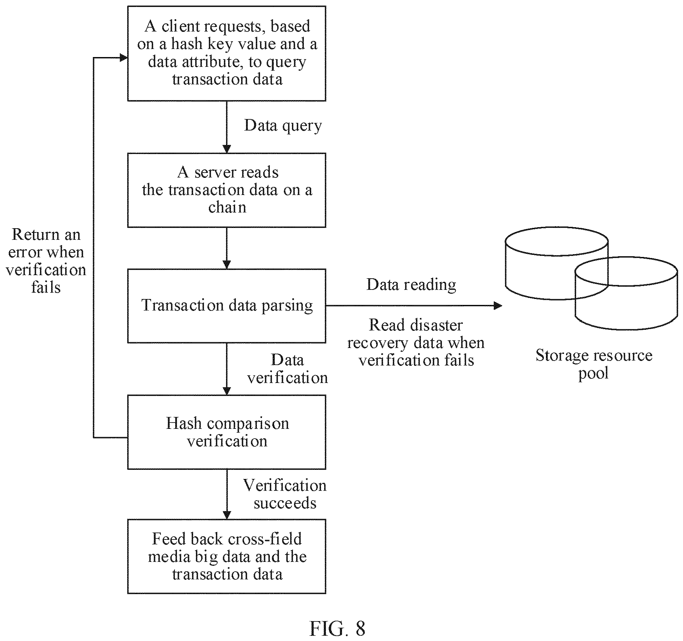

FIG. 8 is a flowchart of another data query method according to an embodiment of this application. As shown in FIG. 8, a client obtains a stored hash key value and stored attribute information of to-be-queried media data, and requests, by invoking a data query interface, to query transaction data of the media data. The hash key value is verification information. After receiving the request of the client, a server reads transaction data on a chain based on the hash key value and the data attribute of the media data, that is, obtains the transaction data of the media data from a blockchain. The server parses the transaction data to obtain a storage address that is of the media data and that is stored on the chain, and reads the media data from a storage resource pool based on the storage address. The server performs data verification, for example, hash comparison verification, on the read media data. When the verification on the read media data succeeds, the server feeds back the obtained media data and transaction data to the client. When the verification on the read media data fails, the server returns an error to the client. Alternatively, when the storage resource pool includes a primary resource pool and a backup resource pool, the server first reads media data from the primary resource pool, and performs data verification on the read media data. When the verification on the media data read from the primary resource pool fails, the server reads media data from the backup resource pool, and performs data verification on the read media data. When the verification on the media data read from the backup resource pool succeeds, the server feeds back the transaction data and the media data read from the backup resource pool to the client. When the verification on the media data read from the backup resource pool fails, the server returns an error to the client.

In conclusion, in embodiments of this application, a data storage system is provided for multi-source cross-field media data storage based on a blockchain. The data storage system provides a data storage interface and a data query interface for a plurality of clients, and each client may invoke the data storage interface to request on-chain storage, and invoke the data query interface to request to obtain media data. The plurality of clients are clients that access a plurality of blockchain systems. In other words, the data storage system may interconnect with and serve the plurality of blockchain systems. In addition, the data storage system further includes a storage resource pool shared by the plurality of clients, to share a storage resource. This reduces problems that are prone to occur when a blockchain participant independently manages a storage resource, for example, a data error that is prone to occur, and high storage resource extension costs. Briefly, in this solution, the blockchain participant does not need to independently orchestrate logic between a client, a blockchain system, and data storage. This improves usability and universality of the blockchain system, and improves data storage security.

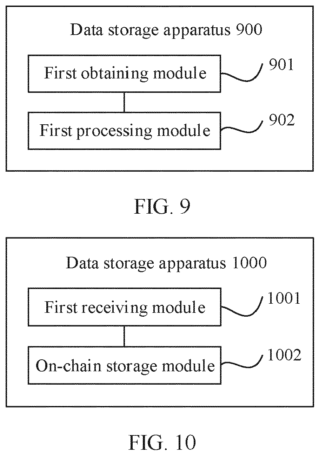

FIG. 9 is a schematic diagram of a structure of a data storage apparatus 900 according to an embodiment of this application. The data storage apparatus 900 may be implemented as a part or all of a computer device by using software, hardware, or a combination thereof. The computer device may be the client in the embodiments in FIG. 1 to FIG. 8. In this embodiment of this application, the apparatus 900 is used in a first client, the first client is any one of a plurality of clients included in a data storage system, the data storage system further includes a storage resource pool shared by the plurality of clients, the data storage system provides a data storage interface for the plurality of clients, the storage resource pool is used to store multi-source cross-field media data, and the plurality of clients are clients that access a plurality of blockchain systems. As shown in FIG. 9, the apparatus 900 includes a first obtaining module 901 and a first processing module 902.

The first obtaining module 901 is configured to obtain a data storage request, where the data storage request carries to-be-stored first media data.

The first processing module 902 is configured to: invoke the data storage interface, and send the data storage request through the data storage interface, where the data storage request indicates to store first transaction data on a blockchain and store the first media data in the storage resource pool, and the first transaction data is transaction data of the first media data.

Optionally, the data storage request further carries first verification information.

The first processing module 902 includes:
a first verification submodule, configured to perform verification on the first media data based on the first verification information through the data storage interface; and
a sending submodule, configured to send the data storage request through the data storage interface when the verification on the first media data succeeds.

Optionally, the data storage request further carries first signature information, and the first signature information is obtained by signing the first media data based on a first private key.

The first processing module 902 includes:
a second verification submodule, configured to perform, by the first client, verification on the first signature information based on a first public key through the data storage interface; and
the sending submodule, configured to send the data storage request through the data storage interface when the verification on the first signature information succeeds.

Optionally, the data storage system further includes a plurality of servers and a service management end.

The first processing module 902 includes:
the sending submodule, configured to send the data storage request to the service management end through the data storage interface, where the data storage request further indicates the service management end to determine a first server from the plurality of servers and send the data storage request to the first server.

Optionally, the data storage system further provides a data query interface for the plurality of clients, and the apparatus 900 further includes:
a second obtaining module, configured to obtain source information of to-be-queried second media data;
a second processing module, configured to: invoke the data query interface, and send a data obtaining request through the data query interface, where the data obtaining request carries the source information of the second media data; and
a receiving module, configured to receive a first query result through the data query interface, where the first query result is obtained based on the source information of the second media data.

Optionally, the source information of the second media data includes second verification information, and the first query result carries found second media data.

The apparatus 900 further includes:
a verification module, configured to perform verification on the found second media data based on the second verification information through the data query interface.

In embodiments of this application, a data storage system is provided for multi-source cross-field media data storage based on a blockchain. The data storage system provides a data storage interface for a plurality of clients, and the client may request on-chain storage by invoking the data storage interface. The data storage system may interconnect with and serve a plurality of blockchain systems. In addition, the data storage system further includes a storage resource pool shared by the plurality of clients, to share a storage resource. This reduces problems that are prone to occur when a blockchain participant independently manages a storage resource, for example, a data error that is prone to occur, and high storage resource extension costs. Briefly, in this solution, the blockchain participant does not need to independently orchestrate logic between a client, a blockchain system, and data storage. This improves usability and universality of the blockchain system, and improves data storage security.

It should be noted that data storage of the data storage apparatus provided in the foregoing embodiments is described by using only division into the foregoing function modules as an example. In actual application, the foregoing functions may be allocated to different function modules for implementation based on a requirement. That is, an internal structure of the apparatus is divided into different function modules to implement all or some of the functions described above. In addition, the data storage apparatus provided in the foregoing embodiments pertains to a same concept as the embodiments of the data storage method. For a specific implementation process of the data storage apparatus, refer to the method embodiments. Details are not described herein again.

FIG. 10 is a schematic diagram of a structure of a data storage apparatus 1000 according to an embodiment of this application. The data storage apparatus 1000 may be implemented as a part or all of a computer device by using software, hardware, or a combination thereof. The computer device may be the server in the embodiments in FIG. 1 to FIG. 8. In this embodiment of this application, the apparatus is used in a first server, the first server is one of at least one server included in a data storage system, the data storage system further includes a plurality of clients and a storage resource pool shared by the plurality of clients, the storage resource pool is used to store multi-source cross-field media data, and the plurality of clients are clients that access a plurality of blockchain systems. As shown in FIG. 10, the apparatus 1000 includes a first receiving module 1001 and an on-chain storage module 1002.

The first receiving module 1001 is configured to receive a data storage request, where the data storage request carries to-be-stored first media data.

The on-chain storage module 1002 is configured to: determine first transaction data, store the first transaction data on a blockchain, and store the first media data in the storage resource pool, where the first transaction data is transaction data of the first media data.

Optionally, the data storage request further carries first verification information.

The on-chain storage module 1002 includes:
a first verification submodule, configured to perform verification on the first media data based on the first verification information; and
a determining submodule, configured to determine the first transaction data when the verification on the first media data succeeds.

Optionally, the data storage request further carries first signature information, and the first signature information is obtained by signing the first media data based on a first private key.

The on-chain storage module 1002 includes:
a second verification submodule, configured to perform verification on the first signature information based on a first public key; and
the determining submodule, configured to determine the first transaction data when the verification on the first signature information succeeds.

Optionally, the data storage system includes a plurality of servers and a service management end, and the first server is determined by the service management end from the plurality of servers.

The first receiving module 1001 includes:
a receiving submodule, configured to receive the data storage request sent by the service management end, where the data storage request received by the service management end is sent by a first client, and the first client is one of the plurality of clients.

Optionally, the storage resource pool includes a plurality of storage nodes, and the plurality of storage nodes are configured to store the multi-source cross-field media data by classification.

The on-chain storage module 1002 includes:
a classification submodule, configured to classify the first media data based on attribute information of the first media data, to obtain a classification result; and
a storage submodule, configured to: determine a first storage node from the plurality of storage nodes based on the classification result, and store the first media data in the first storage node.

Optionally, the apparatus 1000 further includes:
a second receiving module, configured to receive a data obtaining request, where the data obtaining request carries source information of to-be-queried third media data;
a query module, configured to query the third media data from the storage resource pool based on the source information of the third media data, to obtain a second query result; and
a sending module, configured to send, by the first server, the second query result.

Optionally, the source information of the third media data includes third verification information.

The query module includes:
a first query submodule, configured to query the third media data from the storage resource pool based on the source information of the third media data;
a third verification submodule, configured to perform verification on found third media data based on the third verification information; and
a first obtaining submodule, configured to obtain the second query result when the verification on the found third media data succeeds, where the second query result carries the found third media data.

Optionally, the source information of the third media data includes third verification information, and the storage resource pool includes a primary resource pool and a backup resource pool.

The query module includes:
a first processing submodule, configured to: query the third media data from the primary resource pool based on the source information of the third media data, and perform, based on the third verification information, verification on third media data found from the primary resource pool;
a second processing submodule, configured to: when the verification on the third media data found from the primary resource pool fails, or when the third media data is not found from the primary resource pool, query the third media data from the backup resource pool based on the source information of the third media data, and perform, based on the third verification information, verification on third media data found from the backup resource pool; and
a second obtaining submodule, configured to obtain the second query result when the verification on the third media data found from the backup resource pool succeeds, where the second query result carries the third media data found from the backup resource pool.

In embodiments of this application, a data storage system is provided for multi-source cross-field media data storage based on a blockchain. The data storage system provides a data storage interface for a plurality of clients, and the client may request on-chain storage by invoking the data storage interface. The data storage system may interconnect with and serve a plurality of blockchain systems. In addition, the data storage system further includes a storage resource pool shared by the plurality of clients, to share a storage resource. This reduces problems that are prone to occur when a blockchain participant independently manages a storage resource, for example, a data error that is prone to occur, and high storage resource extension costs. Briefly, in this solution, the blockchain participant does not need to independently orchestrate logic between a client, a blockchain system, and data storage. This improves usability and universality of the blockchain system, and improves data storage security.

It should be noted that data storage of the data storage apparatus provided in the foregoing embodiments is described by using only division into the foregoing function modules as an example. In actual application, the foregoing functions may be allocated to different function modules for implementation based on a requirement. That is, an internal structure of the apparatus is divided into different function modules to implement all or some of the functions described above. In addition, the data storage apparatus provided in the foregoing embodiments pertains to a same concept as the embodiments of the data storage method. For a specific implementation process of the data storage apparatus, refer to the method embodiments. Details are not described herein again.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device such as a server or a data center that integrates one or more usable media. The usable medium may be a magnetic medium (for example, a floppy disk, a hard disk, or a magnetic tape), an optical medium (for example, a digital versatile disc (digital versatile disc, DVD)), or a semiconductor medium (for example, a solid state disk (solid state disk, SSD)). It should be noted that, the computer-readable storage medium mentioned in embodiments of this application may be a non-volatile storage medium, or in other words, may be a non-transitory storage medium.

It should be understood that "at least one" mentioned in this specification means one or more, and "a plurality of' means two or more. In the descriptions of embodiments of this application, "/" means "or", unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. In addition, for ease of clearly describing the technical solutions in embodiments of this application, the words such as "first" and "second" are used to distinguish between same or similar items whose functions are basically the same in embodiments of this application. A person skilled in the art may understand that the words such as "first" and "second" do not limit a quantity or an execution order, and the words such as "first" and "second" do not necessarily indicate a specific difference.

It should be noted that, information (including but not limited to user equipment information and user personal information), data (including but not limited to data used for analysis, stored data, and displayed data), and signals related to embodiments of this application are authorized by a user or fully authorized by all parties, and collection, use, and processing of related data need to comply with related laws, regulations, and standards of related countries and regions. For example, the media data, the transaction data, and the like related to embodiments of this application are all obtained based on full authorization.

The foregoing descriptions are embodiments provided in this application, but are not intended to limit this application. Any modification, equivalent replacement, or improvement made without departing from the spirit and principle of this application should fall within the protection scope of this application.

## Claims

1. A data storage method, wherein the method is performed by a first client, the first client is any one of a plurality of clients comprised in a data storage system, the data storage system further comprises a storage resource pool shared by the plurality of clients, the data storage system provides a data storage interface for the plurality of clients, the storage resource pool is used to store multi-source cross-field media data, the plurality of clients are clients that access a plurality of blockchain systems, and the method comprises:
obtaining, by the first client, a data storage request, wherein the data storage request carries to-be-stored first media data; and
invoking, by the first client, the data storage interface, and sending the data storage request through the data storage interface, wherein the data storage request indicates to store first transaction data on a blockchain and store the first media data in the storage resource pool, and the first transaction data is transaction data of the first media data.

2. The method according to claim 1, wherein the data storage request further carries first verification information; and
the sending, by the first client, the data storage request through the data storage interface comprises:
performing, by the first client, verification on the first media data based on the first verification information through the data storage interface; and
sending, by the first client, the data storage request through the data storage interface when the verification on the first media data succeeds.

3. The method according to claim 1 or 2, wherein the data storage request further carries first signature information, and the first signature information is obtained by signing the first media data based on a first private key; and
the sending, by the first client, the data storage request through the data storage interface comprises:
performing, by the first client, verification on the first signature information based on a first public key through the data storage interface; and
sending, by the first client, the data storage request through the data storage interface when the verification on the first signature information succeeds.

4. The method according to any one of claims 1 to 3, wherein the data storage system further comprises a plurality of servers and a service management end; and
the sending, by the first client, the data storage request through the data storage interface comprises:
sending, by the first client, the data storage request to the service management end through the data storage interface, wherein the data storage request further indicates the service management end to determine a first server from the plurality of servers and send the data storage request to the first server.

5. The method according to any one of claims 1 to 4, wherein the data storage system further provides a data query interface for the plurality of clients, and the method further comprises:
obtaining, by the first client, source information of to-be-queried second media data;
invoking, by the first client, the data query interface, and sending a data obtaining request through the data query interface, wherein the data obtaining request carries the source information of the second media data; and
receiving, by the first client, a first query result through the data query interface, wherein the first query result is obtained based on the source information of the second media data.

6. The method according to claim 5, wherein the source information of the second media data comprises second verification information, and the first query result carries found second media data; and
after the receiving, by the first client, a first query result through the data query interface, the method further comprises:
performing, by the first client, verification on the found second media data based on the second verification information through the data query interface.

7. A data storage method, wherein the method is performed by a first server, the first server is one of at least one server comprised in a data storage system, the data storage system further comprises a plurality of clients and a storage resource pool shared by the plurality of clients, the storage resource pool is used to store multi-source cross-field media data, the plurality of clients are clients that access a plurality of blockchain systems, and the method comprises:
receiving, by the first server, a data storage request, wherein the data storage request carries to-be-stored first media data; and
determining, by the first server, first transaction data, storing the first transaction data on a blockchain, and storing the first media data in the storage resource pool, wherein the first transaction data is transaction data of the first media data.

8. The method according to claim 7, wherein the data storage request further carries first verification information; and
the determining, by the first server, first transaction data comprises:
performing, by the first server, verification on the first media data based on the first verification information; and
determining, by the first server, the first transaction data when the verification on the first media data succeeds.

9. The method according to claim 7 or 8, wherein the data storage request further carries first signature information, and the first signature information is obtained by signing the first media data based on a first private key; and
the determining, by the first server, first transaction data comprises:
performing, by the first server, verification on the first signature information based on a first public key; and
determining, by the first server, the first transaction data when the verification on the first signature information succeeds.

10. The method according to any one of claims 7 to 9, wherein the data storage system comprises a plurality of servers and a service management end, and the first server is determined by the service management end from the plurality of servers; and
the receiving, by the first server, a data storage request comprises:
receiving, by the first server, the data storage request sent by the service management end, wherein the data storage request received by the service management end is sent by a first client, and the first client is one of the plurality of clients.

11. The method according to any one of claims 7 to 10, wherein the storage resource pool comprises a plurality of storage nodes, and the plurality of storage nodes are configured to store the multi-source cross-field media data by classification; and
the storing, by the first server, the first media data in the storage resource pool comprises:
classifying, by the first server, the first media data based on attribute information of the first media data, to obtain a classification result; and
determining, by the first server, a first storage node from the plurality of storage nodes based on the classification result, and storing the first media data in the first storage node.

12. The method according to any one of claims 7 to 11, wherein the method further comprises:
receiving, by the first server, a data obtaining request, wherein the data obtaining request carries source information of to-be-queried third media data;
querying, by the first server, the third media data from the storage resource pool based on the source information of the third media data, to obtain a second query result; and
sending, by the first server, the second query result.

13. The method according to claim 12, wherein the source information of the third media data comprises third verification information; and
the querying, by the first server, the third media data from the storage resource pool based on the source information of the third media data, to obtain a second query result comprises:
querying, by the first server, the third media data from the storage resource pool based on the source information of the third media data;
performing, by the first server, verification on found third media data based on the third verification information; and
obtaining, by the first server, the second query result when the verification on the found third media data succeeds, wherein the second query result carries the found third media data.

14. The method according to claim 12, wherein the source information of the third media data comprises third verification information, and the storage resource pool comprises a primary resource pool and a backup resource pool; and
the querying, by the first server, the third media data from the storage resource pool based on the source information of the third media data, to obtain a second query result comprises:
querying, by the first server, the third media data from the primary resource pool based on the source information of the third media data, and performing, based on the third verification information, verification on third media data found from the primary resource pool;
when the verification on the third media data found from the primary resource pool fails, or when the third media data is not found from the primary resource pool, querying, by the first server, the third media data from the backup resource pool based on the source information of the third media data, and performing, based on the third verification information, verification on third media data found from the backup resource pool; and
obtaining, by the first server, the second query result when the verification on the third media data found from the backup resource pool succeeds, wherein the second query result carries the third media data found from the backup resource pool.

15. A data storage apparatus, wherein the apparatus is used in a first client, the first client is any one of a plurality of clients comprised in a data storage system, the data storage system further comprises a storage resource pool shared by the plurality of clients, the data storage system provides a data storage interface for the plurality of clients, the storage resource pool is used to store multi-source cross-field media data, the plurality of clients are clients that access a plurality of blockchain systems, and the apparatus comprises:
a first obtaining module, configured to obtain a data storage request, wherein the data storage request carries to-be-stored first media data; and
a first processing module, configured to: invoke the data storage interface, and send the data storage request through the data storage interface, wherein the data storage request indicates to store first transaction data on a blockchain and store the first media data in the storage resource pool, and the first transaction data is transaction data of the first media data.

16. The apparatus according to claim 15, wherein the data storage request further carries first verification information; and
the first processing module comprises:
a first verification submodule, configured to perform verification on the first media data based on the first verification information through the data storage interface; and
a sending submodule, configured to send the data storage request through the data storage interface when the verification on the first media data succeeds.

17. The apparatus according to claim 15 or 16, wherein the data storage request further carries first signature information, and the first signature information is obtained by signing the first media data based on a first private key; and
the first processing module comprises:
a second verification submodule, configured to perform verification on the first signature information based on a first public key through the data storage interface; and
the sending submodule, configured to send the data storage request through the data storage interface when the verification on the first signature information succeeds.

18. The apparatus according to any one of claims 15 to 17, wherein the data storage system further comprises a plurality of servers and a service management end; and
the first processing module comprises:
the sending submodule, configured to send the data storage request to the service management end through the data storage interface, wherein the data storage request further indicates the service management end to determine a first server from the plurality of servers and send the data storage request to the first server.

19. The apparatus according to any one of claims 15 to 18, wherein the data storage system further provides a data query interface for the plurality of clients, and the apparatus further comprises:
a second obtaining module, configured to obtain source information of to-be-queried second media data;
a second processing module, configured to: invoke the data query interface, and send a data obtaining request through the data query interface, wherein the data obtaining request carries the source information of the second media data; and
a receiving module, configured to receive a first query result through the data query interface, wherein the first query result is obtained based on the source information of the second media data.

20. The apparatus according to claim 19, wherein the source information of the second media data comprises second verification information, and the first query result carries found second media data; and
the apparatus further comprises:
a verification module, configured to perform verification on the found second media data based on the second verification information through the data query interface.

21. A data storage apparatus, wherein the apparatus is used in a first server, the first server is one of at least one server comprised in a data storage system, the data storage system further comprises a plurality of clients and a storage resource pool shared by the plurality of clients, the storage resource pool is used to store multi-source cross-field media data, the plurality of clients are clients that access a plurality of blockchain systems, and the apparatus comprises:
a first receiving module, configured to receive a data storage request, wherein the data storage request carries to-be-stored first media data; and
an on-chain storage module, configured to: determine first transaction data, store the first transaction data on a blockchain, and store the first media data in the storage resource pool, wherein the first transaction data is transaction data of the first media data.

22. The apparatus according to claim 21, wherein the data storage request further carries first verification information; and
the on-chain storage module comprises:
a first verification submodule, configured to perform verification on the first media data based on the first verification information; and
a determining submodule, configured to determine the first transaction data when the verification on the first media data succeeds.

23. The apparatus according to claim 21 or 22, wherein the data storage request further carries first signature information, and the first signature information is obtained by signing the first media data based on a first private key; and
the on-chain storage module comprises:
a second verification submodule, configured to perform verification on the first signature information based on a first public key; and
the determining submodule, configured to determine the first transaction data when the verification on the first signature information succeeds.

24. The apparatus according to any one of claims 21 to 23, wherein the data storage system comprises a plurality of servers and a service management end, and the first server is determined by the service management end from the plurality of servers; and
the first receiving module comprises:
a receiving submodule, configured to receive the data storage request sent by the service management end, wherein the data storage request received by the service management end is sent by a first client, and the first client is one of the plurality of clients.

25. The apparatus according to any one of claims 21 to 24, wherein the storage resource pool comprises a plurality of storage nodes, and the plurality of storage nodes are configured to store the multi-source cross-field media data by classification; and
the on-chain storage module comprises:
a classification submodule, configured to classify the first media data based on attribute information of the first media data, to obtain a classification result; and
a storage submodule, configured to: determine a first storage node from the plurality of storage nodes based on the classification result, and store the first media data in the first storage node.

26. The apparatus according to any one of claims 21 to 25, wherein the apparatus further comprises:
a second receiving module, configured to receive a data obtaining request, wherein the data obtaining request carries source information of to-be-queried third media data;
a query module, configured to query the third media data from the storage resource pool based on the source information of the third media data, to obtain a second query result; and
a sending module, configured to send, by the first server, the second query result.

27. The apparatus according to claim 26, wherein the source information of the third media data comprises third verification information; and
the query module comprises:
a first query submodule, configured to query the third media data from the storage resource pool based on the source information of the third media data;
a third verification submodule, configured to perform verification on found third media data based on the third verification information; and
a first obtaining submodule, configured to obtain the second query result when the verification on the found third media data succeeds, wherein the second query result carries the found third media data.

28. The apparatus according to claim 26, wherein the source information of the third media data comprises third verification information, and the storage resource pool comprises a primary resource pool and a backup resource pool; and
the query module comprises:
a first processing submodule, configured to: query the third media data from the primary resource pool based on the source information of the third media data, and perform, based on the third verification information, verification on third media data found from the primary resource pool;
a second processing submodule, configured to: when the verification on the third media data found from the primary resource pool fails, or when the third media data is not found from the primary resource pool, query the third media data from the backup resource pool based on the source information of the third media data, and perform, based on the third verification information, verification on third media data found from the backup resource pool; and
a second obtaining submodule, configured to obtain the second query result when the verification on the third media data found from the backup resource pool succeeds, wherein the second query result carries the third media data found from the backup resource pool.

29. A data storage system, wherein the data storage system comprises a plurality of clients and at least one server, a first client is one of the plurality of clients, a first server is one of the at least one server, the data storage system further comprises a storage resource pool shared by the plurality of clients, the data storage system provides a data storage interface for the plurality of clients, the storage resource pool is used to store multi-source cross-field media data, and the plurality of clients are clients that access a plurality of blockchain systems;
the first client is configured to implement steps of the method according to any one of claims 1 to 6; and
the first server is configured to implement steps of the method according to any one of claims 7 to 14.

30. A computer-readable storage medium, wherein the storage medium stores a computer program, and when the computer program is executed by a processor, steps of the method according to any one of claims 1 to 6 are implemented or steps of the method according to any one of claims 7 to 14 are implemented.

31. A computer program product, wherein the computer program product stores computer instructions, and when the computer instructions are executed by a processor, steps of the method according to any one of claims 1 to 6 are implemented or steps of the method according to any one of claims 7 to 14 are implemented.
